# EUROPEAN PATENT APPLICATION

(11) **EP 4 524 663 A1**
(43) Date of publication of application: **19.03.2025**
(21) Application number: 24193121.1
(22) Date of filing: 06.08.2024
(51) Int. Cl.: G05B 19/404

(54) **MACHINE TOOL**

(30) Priority: 28.08.2023 JP 2023138144
(71) Applicant: Star Micronics Co., Ltd., Shizuoka-shi, Shizuoka 422-8654 (JP)
(72) Inventor: Kamo, Shotaro, Shizuoka-shi, Shizuoka (JP)
(74) Representative: Grünecker Patent- und Rechtsanwälte PartG mbB

(57) **Abstract**

Provided is a machine tool with which the accuracy of a stop position of a drive subject can be improved in a case where semi-closed loop control is performed.

The machine tool includes a guide mechanism for guiding at least one drive subject among the tool and the workpiece, a servo motor that moves the drive subject guided by the guide mechanism, and a control unit that performs semi-closed loop control on the servo motor so as to move the drive subject from an initial position to a target position. The control unit performs the semi-closed loop control so as to apply to movement of the drive subject a vibration component with which, from a midway position between the initial position and the target position to the target position, an advancing motion toward the target position and a retreating motion opposite to the advancing motion are performed repeatedly.

## Description

### CROSS-REFERENCES

The application claims priority of Japanese Patent Application No. 2023-138144 filed on August 28, 2023. The contents of this application are incorporated herein by reference in their entirety.

### BACKGROUND OF THE INVENTION

### 1. Field of the Invention

The present invention relates to a machine tool that performs semi-closed loop control.

### 2. Description of the Related Art

A numerical control (NC) lathe that uses a tool to cut a workpiece gripped by a spindle is known as a machine tool. An NC lathe includes a guide mechanism for guiding the tool and the workpiece, which serve as drive subjects, a servo motor having an internal encoder, a servo amplifier, an NC device, and so on. The servo amplifier performs semi-closed loop control on the servo motor on the basis of position commands from the NC device and feedback signals from the internal encoder (see Japanese Patent Application Publication No. 2023-25474, for example).

### SUMMARY OF THE INVENTION

However, even when the output of the internal encoder indicates that the drive subject has reached a target position, in actuality the drive subject may stop slightly away from the target position. Adding a sensor for detecting the position of the drive subject in order to improve the accuracy of the stop position of the drive subject leads to a cost increase. It is therefore desirable to improve the accuracy of the stop position of the drive subject in a case where semi-closed loop control is performed without adding a position detection sensor. Note that this problem is not limited to a lathe and exists in various machine tools, such as machining centers.

The present invention discloses a machine tool with which the accuracy of a stop position of a drive subject can be improved in a case where semi-closed loop control is performed.

A machine tool of the present invention is a machine tool for machining a workpiece using a tool, the machine tool including a guide mechanism for guiding at least one drive subject among the tool and the workpiece, a servo motor that moves the drive subject guided by the guide mechanism, and a control unit that performs semi-closed loop control on the servo motor so as to move the drive subject from an initial position to a target position, wherein the control unit performs the semi-closed loop control so as to apply to movement of the drive subject a vibration component with which, from a midway position between the initial position and the target position to the target position, an advancing motion toward the target position and a retreating motion opposite to the advancing motion are performed repeatedly.

According to the present invention, it is possible to provide a machine tool with which the accuracy of a stop position of a drive subject can be improved in a case where semi-closed loop control is performed.

### BRIEF DESCRIPTION OF THE DRAWINGS

FIG. 1 is a schematic view showing an example configuration of a machine tool;
FIG. 2 is a schematic block diagram showing an example configuration of an electric circuit of the machine tool;
FIG. 3 is a schematic block diagram showing an example of a control system for a semi-closed loop;
FIG. 4 is a schematic view showing an example of a relationship between a control position x1 and an actual position x2 of a drive subject;
FIG. 5 is a schematic view showing an example of area division of the control position x1 centering on a reference position 0 during semi-closed loop control;
FIG. 6 is a schematic view showing an example in which a vibration component is applied to movement of the drive subject from a midway position to a target position;
FIG. 7 is a schematic view showing an example of the vibration component;
FIG. 8 is a schematic view showing an example in which vibration is continued for a set period after the drive subject reaches the target position;
FIG. 9 is a flowchart schematically showing an example of vibration condition determination processing;
FIG. 10 is a schematic view showing a current command having sweep frequency variation;
FIG. 11 is a schematic view showing an example of an amplitude magnification M relative to a frequency f;
FIG. 12 is a schematic view showing an example of a phase delay ϕ relative to the frequency f; and
FIG. 13 is a flowchart schematically showing an example of frequency determination processing.

### DESCRIPTION OF THE PREFERRED EMBODIMENTS

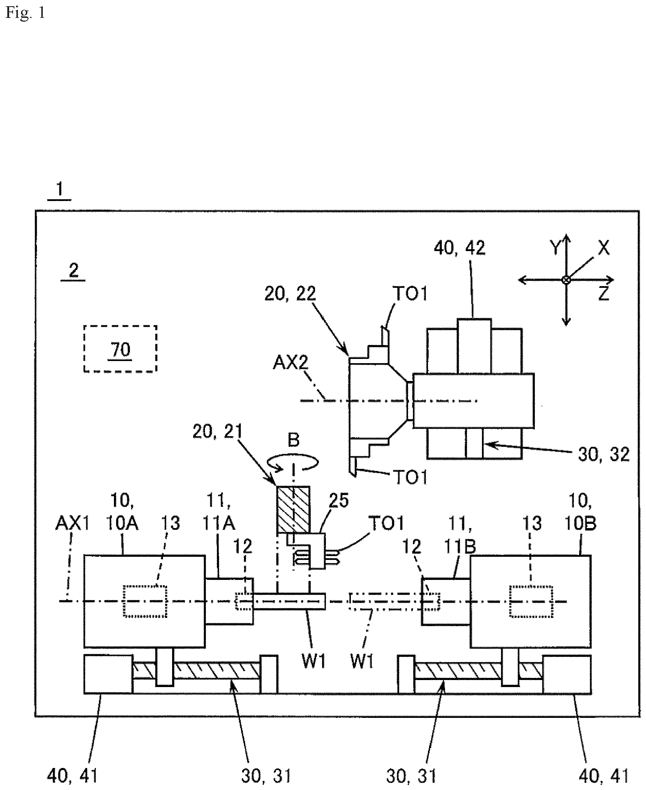

An embodiment of the present invention will be described below. Needless to mention, the following embodiment merely illustrates an example of the present invention, and not all of the features illustrated by the embodiment are essential to solving the problem of the invention.
(1) Outline of technology included in the present invention: First, referring to an example shown in FIGS. 1 to 13, an outline of the technology included in the present invention will be described. Note that since the figures of the present application are schematic diagrams illustrating examples, the magnifications of the directions shown in the figures may be different, and the figures may not be consistent. Needless to mention, the elements of the present technology are not limited to the specific examples denoted by reference symbols. Furthermore, in the present application, a numerical value range "Min to Max" denotes a minimum value Min or more and a maximum value Max or less.

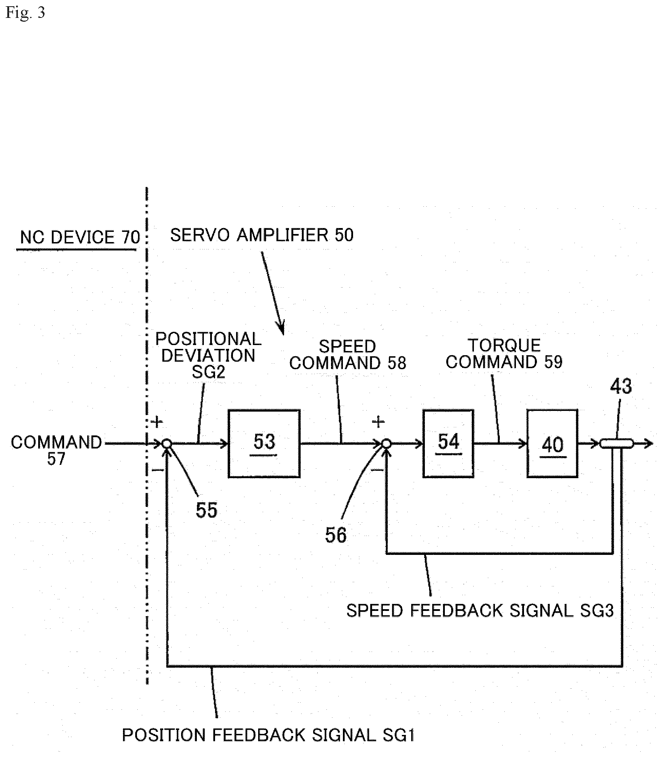

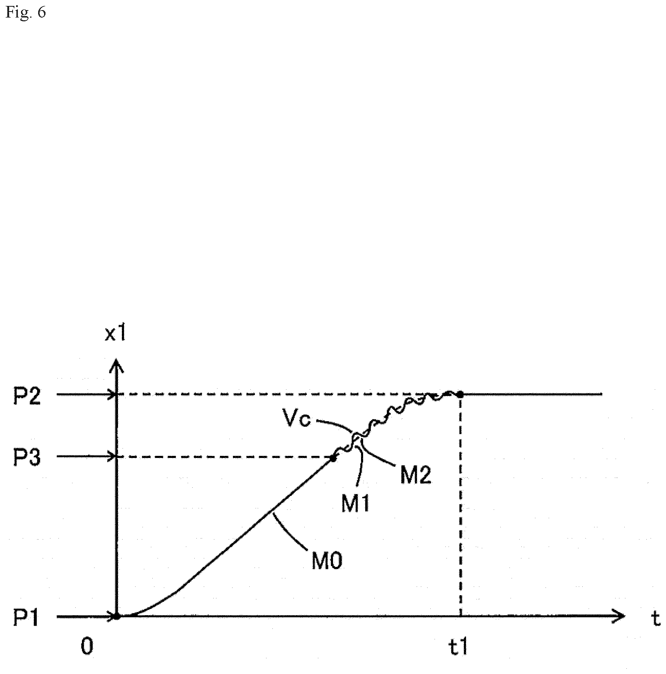

[Aspect 1] As shown in FIGS. 1 to 3, a machine tool 1 according to an aspect of the present technology is a machine tool 1 for machining a workpiece W1 using a tool TO1, the machine tool 1 including a guide mechanism 30, a servo motor 40, and a control unit U1. The guide mechanism 30 guides at least one drive subject among the tool TO1 and the workpiece W1. The servo motor 40 moves the drive subject guided by the guide mechanism 30. The control unit U1 performs semi-closed loop control (see FIG. 3, for example) on the servo motor 40 so as to move the drive subject from an initial position P1 to a target position P2. As shown in FIG. 6 and so on, the control unit U1 performs the aforementioned semi-closed loop control so as to apply to movement M0 of the drive subject a vibration component Vc with which, from a midway position P3 between the initial position P1 and the target position P2 to the target position P2, an advancing motion M1 toward the target position P2 and a retreating motion M2 opposite to the advancing motion M1 are performed repeatedly.

When semi-closed loop control is performed without applying the vibration component Vc to the movement M0 of the drive subject, structures from the servo motor 40 to the drive subject may deform such that internal stress remains in the structures, and as a result, the stop position of the drive subject may actually deviate from the target position P2. In the semi-closed loop control of the aspect described above, the vibration component Vc is applied to the movement M0 of the drive subject from the midway position P3 to the target position P2, and therefore the drive subject reaches the target position P2 while the internal stress generated in the structures is released. Accordingly, the internal stress remaining in the structures decreases such that the actual stop position of the drive subject comes closer to the target position P2. Hence, with the above aspect, the accuracy of the stop position of the drive subject can be improved while suppressing an increase in the cycle time of a command to move the drive subject. Moreover, when the internal stress remaining in the structures decreases, torque generated by the servo motor when the drive subject stops is reduced, leading to a reduction in standby power.

Here, the machine tool includes a lathe, a machining center, and so on. The guide mechanism may guide the drive subject such that the drive subject moves in a predetermined direction, or may guide the drive subject such that the drive subject swivels about a predetermined axis. Moving the drive subject includes moving the drive subject in a commanded movement direction, swiveling the drive subject in a commanded orientation, and so on. The servo motor may move the tool as the drive subject, or may move the workpiece as the drive subject, or may move both the tool and the workpiece as drive subjects. When both the tool and the workpiece serve as the drive subjects, the guide mechanism guides both the tool and the workpiece. The above statements also apply to the following aspects.

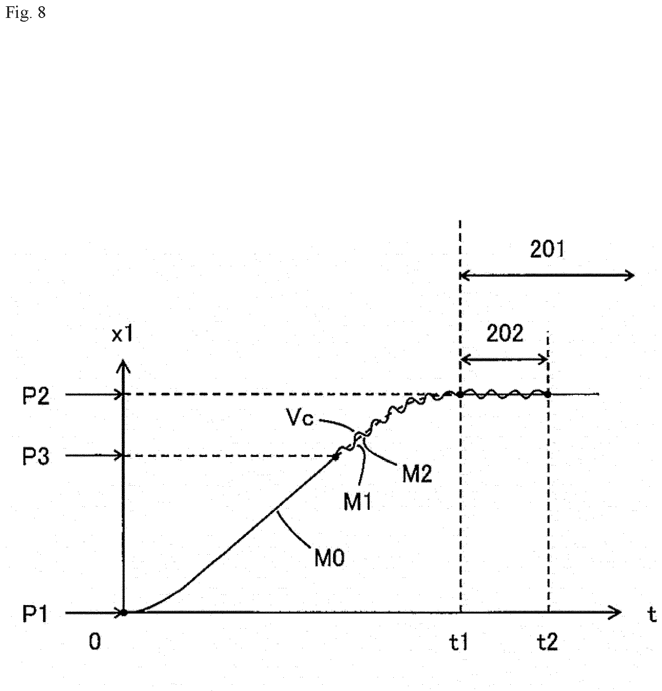

[Aspect 2] As shown in FIG. 8, the control unit U1 may perform the semi-closed loop control described above so as to apply the vibration component Vc to the drive subject over a set period 202 within a period (for example, a stop period 201) during which the drive subject is stopped in the target position P2 after reaching the target position P2. In this case, the internal stress remaining in the structures from the servo motor 40 to the drive subject can be further reduced, enabling a further improvement in the accuracy of the stop position of the drive subject.

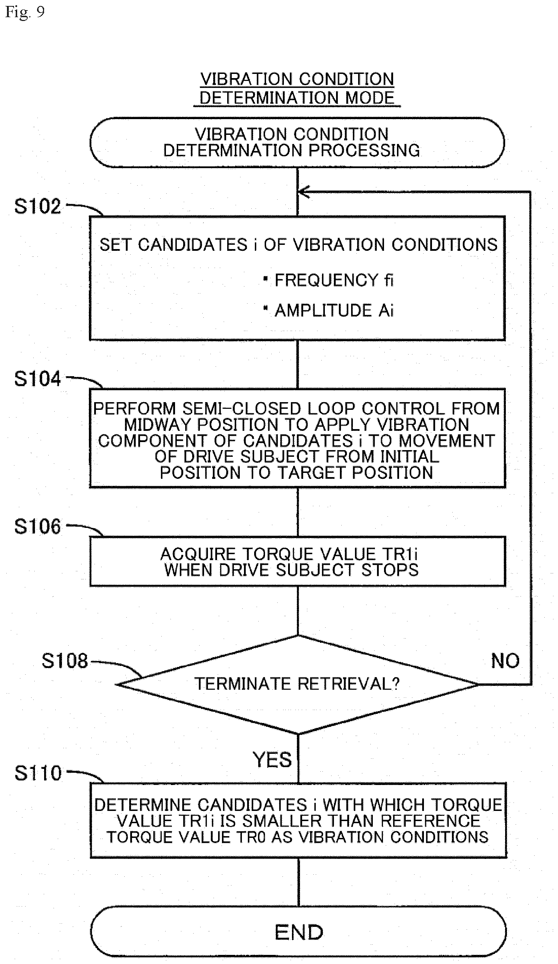

[Aspect 3] As shown in FIG. 9, the control unit U1 may perform the semi-closed loop control described above in a vibration condition determination mode for determining vibration conditions (frequency and amplitude, for example) of the vibration component Vc using each of a plurality of candidates i (for example, a frequency fi and an amplitude Ai) of the vibration conditions as the vibration conditions, and may then detect the torque (a torque value TR1i, for example) generated by the servo motor 40 when the drive subject stops in the target position P2. The control unit U1 may determine the candidates, from among the plurality of candidates i, with which the torque (TR1i) is lower than a reference torque (a reference torque value TR0, for example) as the vibration conditions. When internal stress remains in the structures from the servo motor 40 to the drive subject, the servo motor 40 generates torque (TR1i) corresponding to the internal stress of the structures at the point where the drive subject stops in the target position P2 during the semi-closed loop control. Hence, by determining the vibration conditions of the vibration component Vc such that the torque (TR1i) generated by the servo motor 40 when the drive subject stops is lower than the reference torque (TR0), the internal stress remaining in the structures when the drive subject stops is reduced. Thus, with the above aspects, it is possible to provide a favorable example in which the accuracy of the stop position of the drive subject is improved.

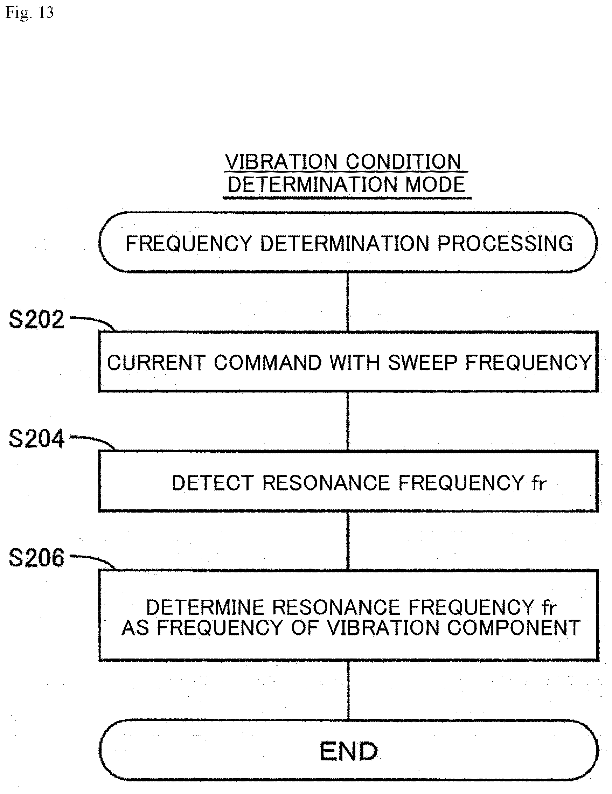

[Aspect 4] The frequency of the vibration component Vc may be included in a resonance frequency band in which resonance can be caused to occur in a part (a tool post 20 or a headstock 10, for example) of the machine tool 1 that holds the drive subject. Note that since the frequencies that are measured when resonance occurs have a range, the resonance frequency band refers to a range of frequencies at which resonance may occur. A resonance frequency fr illustrated in FIG. 13 is included in the resonance frequency band. In the case described above, the vibration component Vc in the resonance frequency band is applied to the movement M0 of the drive subject from the midway position P3 to the target position P2 during the semi-closed loop control, and therefore the internal stress generated in the structures from the servo motor 40 to the drive subject can be released more easily, leading to a further reduction in the internal stress remaining in the structures. Thus, with the above aspect, it is possible to provide a favorable example in which the accuracy of the stop position of the drive subject is improved.

[Aspect 5] As shown in FIG. 13, the control unit U1 may input a current command 300 having sweep frequency variation into the semi-closed loop in the vibration condition determination mode for determining the frequency of the vibration component Vc, detect the resonance frequency fr occurring in the part of the machine tool 1 that holds the drive subject, and determine the detected resonance frequency fr as the frequency of the vibration component Vc. When the current command 300 having sweep frequency variation is input into the semi-closed loop, the part of the machine tool 1 that holds the drive subject vibrates at the sweep frequency of the current command 300. When the resonance frequency fr occurring in this part is detected, the detected resonance frequency fr is determined as the frequency of the vibration component Vc. As a result, the internal stress remaining in the structures from the servo motor 40 to the drive subject can be even further reduced. Thus, with the above aspect, it is possible to provide a favorable example in which the accuracy of the stop position of the drive subject is improved.

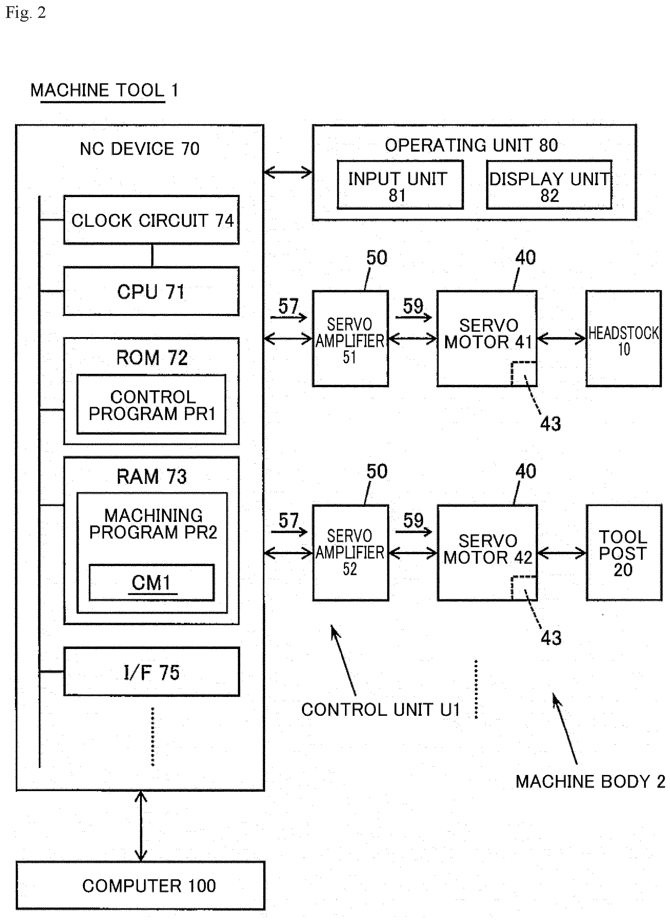

(2) Specific example of the configuration of the machine tool: FIG. 1 schematically illustrates an example configuration of a lathe as an example of the machine tool 1. FIG. 2 schematically illustrates an example configuration of an electric circuit of the lathe as an example of the machine tool 1. The machine tool 1 shown in FIGS. 1 and 2 is an NC automatic lathe having a numerical control (NC) device 70 that numerically controls machining of the workpiece W1, which is gripped by a spindle 11. A computer 100 is not an essential element of the machine tool 1, and therefore, in certain cases, the external computer 100 may not be connected to a machine body 2.

The machine tool 1 shown in FIG. 1 is an NC machine tool including the headstock 10, into which the spindle 11 is incorporated, the tool post 20, which holds the tool TO1 directly or indirectly, the guide mechanism 30 for the headstock 10 or the tool post 20, the servo motor 40, the NC device 70, and so on. Here, the headstock 10 collectively refers to a front headstock 10A and a back headstock 10B, which is also known as an opposite headstock. The spindle 11 collectively refers to a front spindle 11A and a back spindle 11B, which is also known as an opposite spindle. The headstock 10 shown in FIG. 1 is provided with a motor 13, for example a built-in motor, that rotates the spindle 11 about a spindle axis AX1. The spindle 11 shown in FIG. 1 includes a gripping unit 12 such as a collet. The tool post 20 collectively refers to a gang-type tool post 21 and a turret tool post 22. The gang-type tool post 21 shown in FIG. 1 is provided with a swiveling unit 25 into which a plurality of the tools TO1 are incorporated. The guide mechanism 30 collectively refers to a guide mechanism 31 for guiding the headstock 10 and a guide mechanism 32 for guiding the tool post 20. The guide mechanism 32 includes a swiveling guide mechanism for guiding swiveling of the swiveling unit 25. The servo motor 40 collectively refers to a servo motor 41 for moving the headstock 10 and a servo motor 42 for moving the tools TO1. The servo motor 42 includes not only a servo motor for moving the tool post 20 but also a servo motor for swiveling the swiveling unit 25.

Control axes of the machine tool 1 shown in FIG. 1 include an X-axis, indicated by "X", a Y-axis, indicated by "Y", a Z-axis, indicated by "Z", and a B-axis, indicated by "B". A Z-axis direction is a horizontal direction extending along the spindle axis AX1 that serves as the rotation center of the workpiece W1. An X-axis direction is a horizontal direction orthogonal to the Z-axis. A Y-axis direction is a vertical direction orthogonal to the Z-axis. The B-axis is a reference axis for controlling the rotation angle of the swiveling unit 25, for example a vertically oriented control axis extending along the Y-axis. Note that as long as the Z-axis and the X-axis intersect, these two axes need not be orthogonal, as long as the Z-axis and Y-axis intersect, these two axes need not be orthogonal, and as long as the X-axis and the Y-axis intersect, these two axes need not be orthogonal. Furthermore, the figures referred to in the present specification merely illustrate examples used to describe the present technology, and the present technology is not limited thereby. In addition, descriptions of positional relationships between respective parts are merely examples. Accordingly, the present technology also includes examples in which left and right are reversed, the rotation direction is reversed, and so on. Moreover, equality of directions, positions, and so on is not limited to strict coincidence and includes deviation from strict coincidence due to errors.

The machine tool 1 shown in FIG. 1 is a moving spindle-type lathe in which the front headstock 10A and the back headstock 10B both move in the Z-axis direction. The guide mechanism 31 guides the headstock 10 along the Z-axis. When the gripping unit 12 grips the workpiece W1, the guide mechanism 31 guides the workpiece W1 along the Z-axis. Note that the machine tool 1 may be a fixed spindle-type lathe in which the front headstock 10A does not move, or the machine tool 1 may move the front headstock 10A in the Z-axis direction without moving the back headstock 10B. Needless to mention, the headstock 10 may also move in the X-axis direction and so on. The spindle 11 uses the gripping unit 12 to grip the workpiece W1 in a releasable manner. The motor 13 rotates the spindle 11 together with the workpiece W1 about the spindle axis AX1. When the workpiece W1 prior to machining is a long, cylindrical (rod-shaped) material, for example, the workpiece W1 may be supplied to the gripping unit 12 from a rear end (the left end in FIG. 1) of the front spindle 11A. In this case, a guide bush for supporting the workpiece W1 so as to be capable of sliding in the Z-axis direction may be disposed on a front side (the right side in FIG. 1) of the front spindle 11A. When the workpiece W1 prior to machining is a short material, the workpiece W1 may be supplied to the gripping unit 12 from a front end of the front spindle 11A. Following front machining, the workpiece W1 is transferred from the front spindle 11A to the back spindle 11B and back-machined so as to become a product.

The tool post 20 is capable of moving the X-axis direction and the Y-axis direction with the plurality of tools TO1 for machining the workpiece W1 directly or indirectly attached thereto. The guide mechanism 32 guides the tool post 20 together with the tools TO1 along the X-axis and the Y-axis. Needless to mention, the tool post 20 may also move in the Z-axis direction. The plurality of tools TO1 include a cutting tool having a cut-off tool, rotary tools such as a rotary drill and an endmill, and so on. The swiveling unit 25 provided on the gang-type tool post 21 is capable of swiveling about the B-axis together with the tools TO1. The gang-type tool post 21 may also be said to include the guide mechanism 32 for guiding the swiveling unit 25 about the B-axis together with the tools TO1. The turret tool post 22 indexes the tools TO1 by swiveling about a swiveling axis AX2 extending along the Z-axis. A rolling guide mechanism such as a ball screw or a linear guide, a sliding guide mechanism such as a combination of a dovetail and a dovetail groove, and so on may be used as the guide mechanism 30.

As shown in FIG. 2, an operating unit 80, the servo amplifier 50, a rotary driving unit (not shown) for the spindle 11, a driving unit (not shown) for the gripping unit 12, and so on are connected to the NC device 70. Here, the servo amplifier 50 collectively refers to a servo amplifier 51 for the headstock 10 and a servo amplifier 52 for the tool post 20. The servo amplifier 50 and the NC device 70 are examples of the control unit U1. The servo motor 40, which has an encoder 43 in the interior thereof, is connected to the servo amplifier 50. The NC device 70 includes a central processing unit (CPU) 71 serving as a processor, a read only memory (ROM) 72 constituted by a semiconductor memory, a random access memory (RAM) 73 constituted by a semiconductor memory, a clock circuit 74, an interface (I/F) 75, and so on. Thus, the NC device 70 is a type of computer. In FIG. 2, I/Fs of the operating unit 80, the servo amplifier 50, the external computer 100, and so on are illustrated collectively as the I/F 75.

A control program PR1 for interpreting and executing a machining program PR2 including a plurality of commands CM1, and so on are written to the ROM 72. The ROM 72 may be a data-rewritable semiconductor memory. The machining program PR2 created by an operator is stored rewritably in the RAM 73. The machining program is also known as an NC program. The CPU 71 executes the control program PR1 recorded in the ROM 72 using the RAM 73 as a work area, and thus realizes the functions of the NC device 70. Needless to mention, some or all of the functions realized by the control program PR1 may be realized by other means such as an application specific integrated circuit (ASIC).

The operating unit 80 includes an input unit 81 and a display unit 82, and functions as a user interface of the NC device 70. The input unit 81 is constituted by, for example, a button or a touch panel for receiving operation input from the operator. The display unit 82 is constituted by, for example, a display that displays the content of various settings for which operation input is received from the operator, and various information relating to the machine tool 1. The operator can store the machining program PR2 in the RAM 73 using the operating unit 80 or the computer 100.

The servo amplifier 51 controls the position and movement speed of the headstock 10 together with the workpiece W1 serving as the drive subject in accordance with a command 57 from the NC device 70. The servo motor 41, which is controlled by the servo amplifier 51, rotates in accordance with a torque command 59 from the servo amplifier 51 so as to move the headstock 10 together with the workpiece W1 via the guide mechanism 31. For example, when the headstock 10 is the front headstock 10A that is capable of moving along the Z-axis, the servo amplifier 51 controls the position and movement speed of the front headstock 10A in the Z-axis direction in accordance with the command 57 from the NC device 70. The servo motor 41 moves the front headstock 10A in the Z-axis direction via the guide mechanism 31 in accordance with the torque command 59 from the servo amplifier 51.

The servo amplifier 52 controls the position and movement speed of the tool post 20 together with the tool TO1 serving as the drive subject in accordance with the command 57 from the NC device 70. The servo motor 42, which is controlled by the servo amplifier 52, rotates in accordance with the torque command 59 from the servo amplifier 52 so as to move the tool post 20 together with the tool TO1 via the guide mechanism 32. For example, when the tool post 20 is the gang-type tool post 21 that is capable of moving along the X-axis and the Y-axis, the X-axis servo amplifier 52 controls the position and movement speed of the gang-type tool post 21 in the X-axis direction in accordance with the command 57 from the NC device 70, and the Y-axis servo amplifier 52 controls the position and movement speed of the gang-type tool post 21 in the Y-axis direction in accordance with the command 57 from the NC device 70. The X-axis servo motor 42 moves the gang-type tool post 21 in the X-axis direction via the guide mechanism 32 in accordance with the torque command 59 from the servo amplifier 52, and the Y-axis servo motor 42 moves the gang-type tool post 21 in the Y-axis direction via the guide mechanism 32 in accordance with the torque command 59 from the servo amplifier 52. Furthermore, the B-axis servo amplifier 52 controls the position and rotation speed of the swiveling unit 25 together with the tool TO1 serving as the drive subject in accordance with the command 57 from the NC device 70. The B-axis servo motor 42 rotates in accordance with the torque command 59 from the servo amplifier 52 so as to swivel the swiveling unit 25 together with the tools TO1 via the guide mechanism 32.

FIG. 3 schematically illustrates a control system for the semi-closed loop. The semi-closed loop control system includes a loop for feeding back a position detected by the encoder 43 provided in the servo motor 40. Since the encoder 43 is located inside the servo motor 40, a position acquired by detecting the actual position of the drive subject is not fed back in the semi-closed loop control system. The control system shown in FIG. 3 is provided for each of the Z-axis movement of the front headstock 10A, the Z-axis movement of the back headstock 10B, the X-axis movement of the gang-type tool post 21, the Y-axis movement of the gang-type tool post 21, the B-axis swiveling of the swiveling unit 25, the X-axis movement of the turret tool post 22, the Y-axis movement of the turret tool post 22, and so on.

The NC device 70 can output the command 57 to the servo amplifier 50. When the command 57 is a position command for the drive subject (the tool TO1 or the workpiece W1), a subtraction unit 55 of the servo amplifier 50 receives the position command input from the NC device 70, receives a position feedback signal SG1 input on the basis of output from the encoder 43 of the servo motor 40, and outputs a positional deviation SG2 to a position gain 53. The positional deviation SG2 is a difference signal between the position command for the drive subject and the position feedback signal SG1. The position gain 53 receives the positional deviation SG2 input from the subtraction unit 55, and on the basis of the positional deviation SG2 outputs a speed command 58 to a subtraction unit 56. The subtraction unit 56 receives the speed command 58 input from the position gain 53, receives a speed feedback signal SG3 input on the basis of the output from the encoder 43, corrects the speed command 58 on the basis of the speed feedback signal SG3, and inputs the corrected speed command 58 into a speed gain 54. The speed gain 54 receives the corrected speed command input from the subtraction unit 56, and on the basis of the corrected speed command outputs the torque command 59 to the servo motor 40. The torque of the servo motor 40 is commensurate with a current flowing through the servo motor 40, and therefore the torque command 59 corresponds to a current value flowing through the servo motor 40.

Thus, the NC device 70 and the servo amplifier 50 perform semi-closed loop control on the servo motor 40 so as to move the drive subject from the initial position to the target position in response to the command CM1 to move the drive subject. For example, when the command CM1 is a fast feed command for moving the tool TO1 along the X-axis, the NC device 70 and the servo amplifier 52 for the tool perform semi-closed loop control on the servo motor 42 so as to move the tool TO1 along the X-axis in a straight line from the initial position to the target position. Note that a fast feed command differs from a cutting feed command, which is issued when cutting the workpiece W1, in being a command for moving the tool TO1 without cutting the workpiece W1. The command CM1 may be a command for moving the tool TO1 along a plurality of axes, for example the X-axis and the Y-axis. When the command CM1 is a fast feed command for swiveling the tool TO1 about the B-axis, the NC device 70 and the servo amplifier 52 perform semi-closed loop control on the servo motor 42 so as to swivel the tool TO1 about the B-axis from the initial position to the target position. When the command CM1 is a command for moving the workpiece W1 along the Z-axis, the NC device 70 and the servo amplifier 51 for the headstock perform semi-closed loop control on the servo motor 41 so as to move the workpiece W1 along the Z-axis in a straight line from the initial position to the target position.

Moreover, the NC device 70 can output a current command serving as a command value relating to current control to the servo amplifier 50 as the command 57. The current command refers to an input value that has not received current control feedback, while the torque command 59 input into the servo amplifier 50 denotes an output value that has received current control feedback. When there are no feedback signals (SG1, SG3), the torque command 59 serves as the current command. Furthermore, the servo amplifier 50 can output a torque value corresponding to the torque command 59 to the NC device 70. The torque value corresponds to the current value flowing through the servo motor 40. The NC device 70 can output to the servo amplifier 50 a torque value acquisition command for acquiring the torque value from the servo amplifier 50. Having received the torque value acquisition command, the servo amplifier 50 outputs the torque value to the NC device 70.

The aforementioned encoder 43 is located inside the servo motor 40 in order to indirectly detect the position of the drive subject. Friction is generated by a guide surface of the guide mechanism 30, a sealing O ring, and so on, and therefore, in a state where the structures from the servo motor 40 to the drive subject have deformed such that internal stress remains therein, the detected position based on the encoder 43 deviates from the actual position of the drive subject. Note that the aforementioned structures are the guide mechanism 30, the headstock 10, the tool post 20, and so on. As a result of the above, even when the output of the encoder 43 located inside the servo motor 40 indicates that the drive subject has reached the target position, in actuality, the drive subject may stop slightly away from the target position.

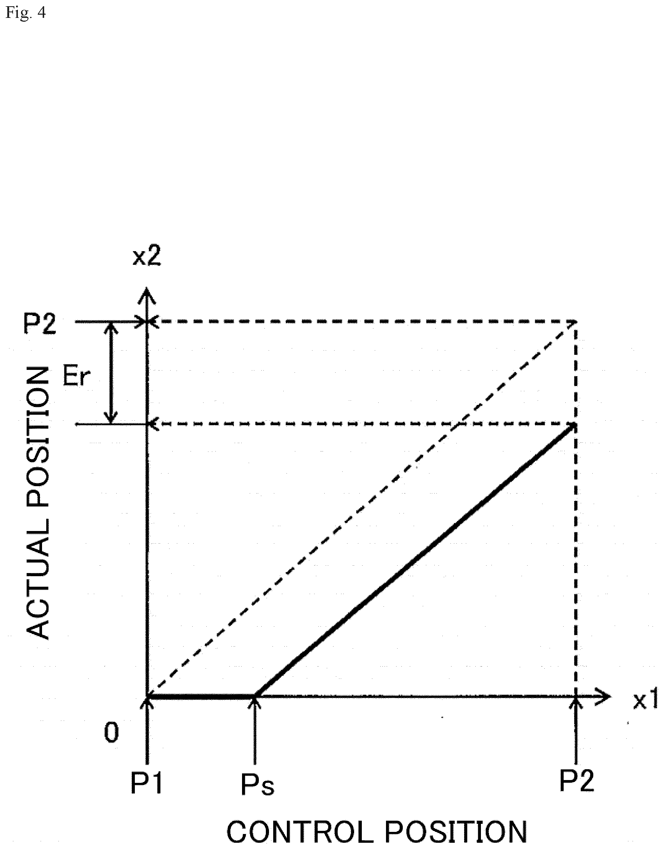

FIG. 4 schematically illustrates an example of a relationship between a control position x1 based on the output of the encoder 43 and an actual position x2 of the drive subject in a case where the control unit U1 performs semi-closed loop control to move the drive subject from the initial position P1 to the target position P2. The control position x1 is the control position of the semi-closed loop after receiving the position feedback signal SG1 shown in FIG. 3. When, for example, the drive subject is moved along the X-axis, the control position x1 denotes the control position on the X-axis, and the position x2 denotes the actual position on the X-axis. Note that it is assumed that in the initial position P1, no internal stress remains in the aforesaid structures.

Frictional force acts on the guide surface of the guide mechanism 30. When the servo motor 40 starts to drive the drive subject, due to the deformation of the aforesaid structures, the drive subject actually starts to move at an operation start point Ps that is slightly delayed from the control initial position P1. Frictional force acts on the guide surface of the guide mechanism 30 likewise while the drive subject is moving, and as a result, the deformation of the structures remains. The internal stress caused by the deformation of the structures remains even after the control position of the drive subject reaches the target position P2, and as a result, an error Er occurs in the actual position of the drive subject relative to the exact target position P2. Eliminating the error Er by adding a sensor that detects the actual position of the drive subject leads to a cost increase. Note that the same may be said with respect to the B-axis swiveling of the swiveling unit 25.

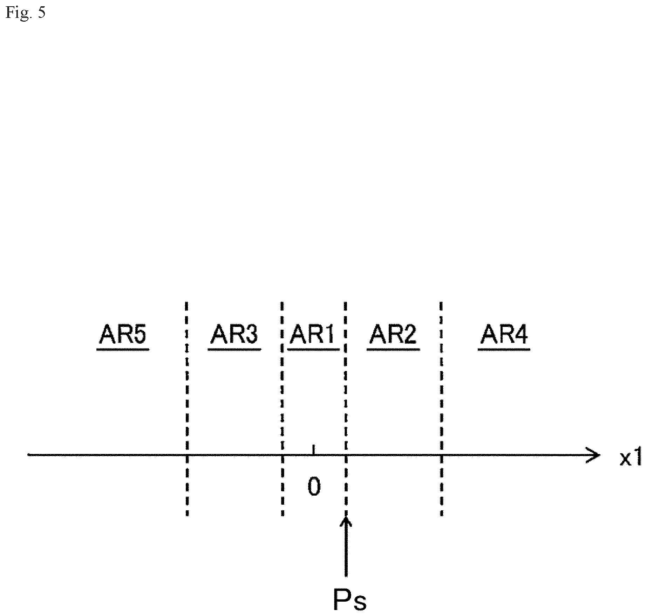

FIG. 5 schematically illustrates an example of area division of the control position x1 centering on a reference position 0 during the semi-closed loop control. The control position x1 denotes the target position of the drive subject in the movement direction of the drive subject, the right side of the reference position 0 denotes a positive position, and the left side of the reference position 0 denotes a negative position. Since frictional force acts on the guide surface of the guide mechanism 30, the actual position of the drive subject does not change when control is performed to move the drive subject within the range of a first area AR1, in which only a force that is smaller than the frictional force acts on the drive subject about the reference position 0 in the movement direction of the drive subject. The reason for this is that the deformation of the structures from the servo motor 40 to the drive subject does not exceed the friction on the guide surface. A positive-side boundary of the first area AR1 corresponds to the operation start point Ps shown in FIG. 4. Second areas AR2 and AR3 on the respective outer sides of the first area AR1 in the movement direction of the drive subject are areas where the actual position of the drive subject changes due to control for moving the drive subject in the movement direction of the drive subject, and where deformation of the structures decreases due to vibration centering on the reference position 0. Third areas AR4 and AR5 on the respective outer sides of the second areas AR2 and AR3 in the movement direction of the drive subject are areas where change in the position of the drive subject in the movement direction of the drive subject is large, and therefore a large amount of deformation remains in the structures following each movement in the positive direction and the negative direction during vibration centering on the reference position 0. It may also be said that a large amount of internal stress remains due to movement from the third area AR4 on the positive side to the third area AR5 on the negative side, and a large amount of internal stress remains due to movement from the third area AR5 on the negative side to the third area AR4 on the positive side. It is therefore preferable that in the vibration for reducing the residual stress in the structures, movements in the movement direction of the drive subject from the second area AR2 on the positive side to the second area AR3 on the negative side and from the second area AR3 on the negative side to the second area AR2 on the positive side are performed repeatedly.

In this specific example, by applying to the movement of the drive subject a micro-vibration component by which the moving drive subject moves back and forth between the second areas AR2 and AR3 before reaching the target position P2, residual stress in the structures is reduced while suppressing an increase in the cycle time of the command CM1. As a result, when semi-closed loop control is performed, the actual stop position of the drive subject comes closer to the target position P2, leading to an improvement in the accuracy of the stop position of the drive subject.

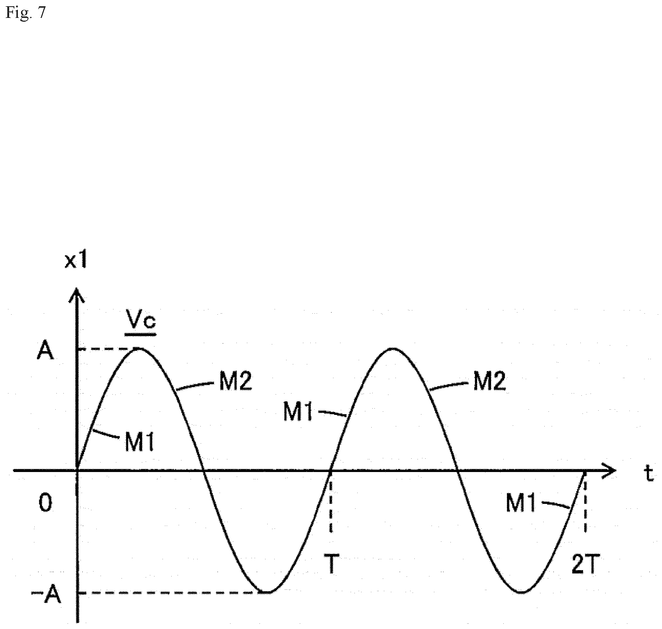

FIG. 6 schematically illustrates the manner in which the vibration component Vc is applied to the movement of the drive subject from the midway position P3 between the initial position P1 and the target position P2 to the target position P2. FIG. 7 schematically illustrates the vibration component Vc. In FIGS. 6 and 7, the horizontal axis denotes time t, and the vertical axis denotes the control position x1. FIG. 6 shows that when t=0, control for starting to move the drive subject from the initial position P1 is performed, and when the time t reaches a movement stop timing 11, control for stopping the drive subject in the target position P2 is performed. t=0 in FIG. 7 differs from t=0 in FIG. 6. For example, when the tool TO1 moves in a straight line along the X-axis, the control position x1 indicates the control position of the tool TO1 (specifically, the cutting edge) along the X-axis.

It is assumed that the command CM1 is a fast feed command for moving the tool TO1 from the initial position P1 to the target position P2. In this case, the servo amplifier 52 for the tool performs semi-closed loop control on the servo motor 42 so as to apply to the movement of the tool TO1 (the movement M0 of the drive subject) the vibration component Vc with which, from the midway position P3 to the target position P2, the advancing motion M1 toward the target position P2 and the retreating motion M2 opposite to the advancing motion M1 are performed repeatedly. As shown in FIG. 6, the vibration component Vc is applied to the movement of the tool TO1 from the midway position P3 to the target position P2, but is not applied to the movement of the tool TO1 from the initial position P1 to the midway position P3. By applying the vibration component Vc, the tool TO1 reaches the target position P2 while the internal stress generated in the structures from the servo motor 42 for the tool to the tool TO1 is released, and as a result, the internal stress remaining in the structures is reduced. Thus, the actual movement stop position of the tool TO1 comes closer to the target position P2, leading to an improvement in the accuracy of the movement stop position of the tool TO1. The vibration component Vc may also be considered as a micro-vibration component with which the internal stress generated in the structures from the servo motor 40 to the drive subject is released when the drive subject stops in the target position P2. By reducing the internal stress remaining in the structures, the torque generated by the servo motor 42 when the tool TO1 stops moving is reduced, leading to a reduction in standby power. Furthermore, by not applying the vibration component Vc to the movement of the tool TO1 from the initial position P1 to the midway position P3, power consumption is suppressed. Note that the same may be said with respect to the B-axis swiveling of the swiveling unit 25, the Z-axis movement of the workpiece W1, and so on.

The midway position P3 may be a position located a predetermined distance from the target position P2, which is a position where, using the target position P2 as a reference, the drive subject becomes in-position. In-position refers to a set position in which the drive subject is treated as having reached the target position. Alternatively, the midway position P3 may be a position where the rotation speed of the servo motor 40 falls to or below a predetermined rotation speed, a position set at a timing a predetermined period before an expected movement stop timing t1 at which the drive subject is expected to reach the target position P2, and so on.

The vibration component Vc shown in FIG. 7 is a sine wave having a period of T and an amplitude of A. Accordingly, within t=0 to T, a component of the advancing motion M1 is applied to the movement of the tool TO1 from 0 to (1/4)T and from (3/4)T to T, and a component of the retreating motion M2 is applied to the movement of the tool TO1 from (1/4)T to (3/4)T. Note that the vibration component Vc is not limited to a sine wave and may also be a triangular wave, a rectangular wave, or the like. Triangular waves and rectangular waves include harmonic components and are therefore assumed to bring about a greater effect in terms of releasing the internal stress generated in the structures when the drive subject stops. The NC device 70 can output the amplitude A and the frequency (denoted as f) of the vibration component Vc to the servo amplifier 50 as arguments. The servo amplifier 50, having received the amplitude A and the frequency f, performs semi-closed loop control so as to apply the vibration component Vc of the amplitude A and the frequency f to the movement M0 of the drive subject.

The amplitude A of the vibration component Vc serving as the control position x1 is preferably 1 to 100 µm. When the amplitude A is equal to or larger than 1 µm, the vibration component Vc more easily passes through the first area AR1 of FIG. 5 and enters the second areas AR2 and AR3. When the amplitude A is equal to or smaller than 100 µm, the vibration component Vc more easily enters the second areas AR2 and AR3 without reaching the third areas AR4 and AR5 of FIG. 5. By setting the amplitude A at or below 100 µm, the vibration component Vc may be considered as a micro-vibration component, and the vibration that actually occurs may be said to be micro-vibration. The frequency f = 1/T of the vibration component Vc is preferably 100 to 1000 Hz. By setting the frequency f to be equal to or larger than 100 Hz, the number of vibrations occurring from the midway position P3 to the target position P2 increases, making it easier to release the internal stress generated in the structures when the drive subject stops. By setting the frequency f to be equal to or smaller than 1000 Hz, the vibration of the drive subject is more likely to follow the control, making it easier to release the internal stress generated in the structures when the drive subject stops.

Furthermore, to make it easier to release the internal stress generated in the structures, the semi-closed loop control for moving the drive subject may be performed while changing the vibration conditions, including the frequency f and the amplitude A, and the vibration conditions under which the internal stress generated in the structures is released to the greatest extent when the drive subject stops may be retrieved. When internal stress remains in the structures at the point where the drive subject stops, the servo amplifier 50 controls the servo motor 40 to generate torque for canceling out the internal stress in the structures. Accordingly, the magnitude of the torque generated by the servo motor 40 when the drive subject stops corresponds to the magnitude of the internal stress in the structures. Hence, the semi-closed loop control for moving the drive subject may be performed while changing the vibration conditions, and the vibration conditions under which the torque value acquired from the servo amplifier 50 when the drive subject stops is smallest may be set as the vibration conditions of the vibration component Vc. For example, when vibration conditions are stored in the ROM 72 shown in FIG. 2, the NC device 70 can output the vibration conditions stored in the ROM 72 to the servo amplifier 50 as arguments. Thus, the vibration component Vc is applied to the movement M0 of the drive subject such that the internal stress generated in the structures when the drive subject stops is released to the maximum extent. The vibration conditions may be retrieved within guidelines of 1 to 100 µm for the amplitude A and 100 to 1000 Hz for the frequency f. A waveform such as a triangular wave or a rectangular wave may also be included in the retrieved vibration conditions.

As shown in FIG. 8, the servo amplifier 50 may perform the semi-closed loop control such that the vibration component Vc is applied to the drive subject over the set period 202 within the stop period 201 during which the drive subject is stopped in the target position P2 after reaching the target position P2. The set period 202 refers to a continuous period in which the vibration component Vc is continuously applied up to a vibration stop timing t2 following the movement stop timing t1 at which the drive subject reaches the target position P2, and is shorter than the stop period 201. The set period 202 may be 1 to 1000 milliseconds or the like, but is not specifically limited thereto. By continuously vibrating the drive subject over the set period 202 after the drive subject reaches the target position P2, it is possible to further reduce the internal stress that remains in the structures from the servo motor 40 to the drive subject when the drive subject is in the target position P2. As a result, the accuracy of the stop position of the drive subject can be further improved.

The machine tool 1 shown in FIG. 2 may have both a machining mode, in which the workpiece W1 is machined by the tools TO1 in accordance with the machining program PR2, and a vibration condition determination mode, in which the vibration conditions of the vibration component Vc are determined. FIG. 9 schematically illustrates an example of vibration condition determination processing performed by the NC device 70 in the vibration condition determination mode. The NC device 70 starts the vibration condition determination processing when the operating unit 80 receives an operation for selecting the vibration condition determination mode. The vibration condition determination processing will be described below, using movement of the tool TO1 as an example.

When the vibration condition determination processing starts, the NC device 70 sets the subject candidates i with which the torque value TR1i at the point where the tool TO1 stops moving is to be acquired from among the plurality of candidates i of the vibration conditions (step S 102). The candidates i of the vibration conditions are a combination of the frequency fi and the amplitude Ai, for example. A waveform such as a triangular wave or a rectangular wave, the set period 202 shown in FIG. 8, and so on may also be included in the factors of the candidates i. Next, the NC device 70 causes the servo amplifier 52 to execute semi-closed loop control so that from the midway position P3, a vibration component having the candidates i is applied to the movement of the tool TO1 (the movement M0 of the drive subject) from the initial position P1 to the target position P2 (step S104). After the tool TO1 stops moving and application of the vibration component is also stopped, the NC device 70 acquires the torque value TR1i from the servo amplifier 52 (step S 106). Thus, the NC device 70 and the servo amplifier 52 perform semi-closed loop control using the candidates i as the vibration conditions, and detect the torque generated by the servo motor 42 when the tool TO1 stops in the target position P2.

After acquiring the torque value TR1i, the NC device 70 determines whether or not to terminate vibration condition retrieval (step S108). For example, the NC device 70 may determine that retrieval is to be terminated when the torque value TR1i is smaller than the reference torque value TR0 corresponding to the reference torque, or may determine that retrieval is to be terminated when the torque value TR1i has been acquired for all of the candidates i. After determining that vibration condition retrieval is not to be terminated, the NC device 70 repeats the processing of steps S102 to S108. After determining that vibration condition retrieval is to be terminated, the NC device 70 determines the candidates i with which the torque value TR1i was smaller than the reference torque value TR0 as the vibration conditions of the vibration component Vc (step S110) and then terminates the vibration condition determination processing. In step S110, the NC device 70 may determine the candidates i with which the smallest torque value, among the acquired torque values TR1i, were acquired as the vibration conditions of the vibration component Vc. Thus, the NC device 70 and the servo amplifier 52 determine the candidates, among the plurality of candidates i, with which the torque generated by the servo motor 42 at the point where the tool TO1 stops moving is smaller than the reference torque as the vibration conditions of the vibration component Vc.

When the tool TO1 stops in the target position P2 during the semi-closed loop control, the servo motor 42 generates torque corresponding to the internal stress in the structures up to the tool TO1. When the vibration conditions of the vibration component Vc are determined so that the torque generated by the servo motor 42 at the point where the tool TO1 stops moving is smaller than the reference torque, the internal stress that remains in the structures when the tool TO1 stops moving is reduced. Hence, by performing the vibration condition determination processing, the accuracy of the movement stop position of the TO1 in the machining mode improves. Needless to mention, the accuracy of the stop position of the drive subject in the machining mode improves due to a similar action likewise with respect to the B-axis swiveling of the swiveling unit 25, the Z-axis movement of the workpiece W1, and so on.

The frequency of the vibration component Vc may be included in the resonance frequency band in which resonance can occur in the part of the machine tool 1 that holds the drive subject. When the drive subject is the tool TO1, at least the tool post 20 may be included in the part that holds the drive subject, and at least a part of the guide mechanism 32 may be included as the part in which resonance occurs. When the drive subject is the workpiece W1, at least the headstock 10 may be included in the part that holds the drive subject, and at least a part of the guide mechanism 31 may be included as the part in which resonance occurs. The resonance frequency (denoted as fr) occurring in the part that holds the drive subject is measured by a hammering test before the machine tool 1 is shipped, for example, and written to the ROM 72. The measured resonance frequency fr has a range, and therefore, assuming that the range is ±Δf (Δf > 0), the resonance frequency band refers to a range of frequencies in which resonance may occur, i.e., (fr - Δf) to (fr + Δf).

When the frequency of the vibration component Vc is included in the resonance frequency band, the structures from the servo motor 40 to the drive subject are vibrated comparatively strongly by the vibration component Vc in the resonance frequency band, which is applied to the drive subject from the midway position P3 to the target position P2. Note that since the amplitude A of the vibration component Vc is small, being approximately 1 to 100 µm, and since the vibration component Vc is applied to the movement M0 of the drive subject only from the midway position P3, a reduction in the positional accuracy of the drive subject due to the resonance occurring in the part that holds the drive subject is suppressed. More specifically, when the command CM1 is a fast feed command by which the workpiece W1 is not cut, resonance does not lead to a reduction in the positional accuracy of the drive subject. Since the structures are vibrated comparatively strongly, the internal stress generated in the structures is more easily released, leading to a further reduction in the internal stress remaining in the structures. Hence, when the frequency of the vibration component Vc is included in the resonance frequency band, the accuracy of the stop position of the drive subject can be further improved.

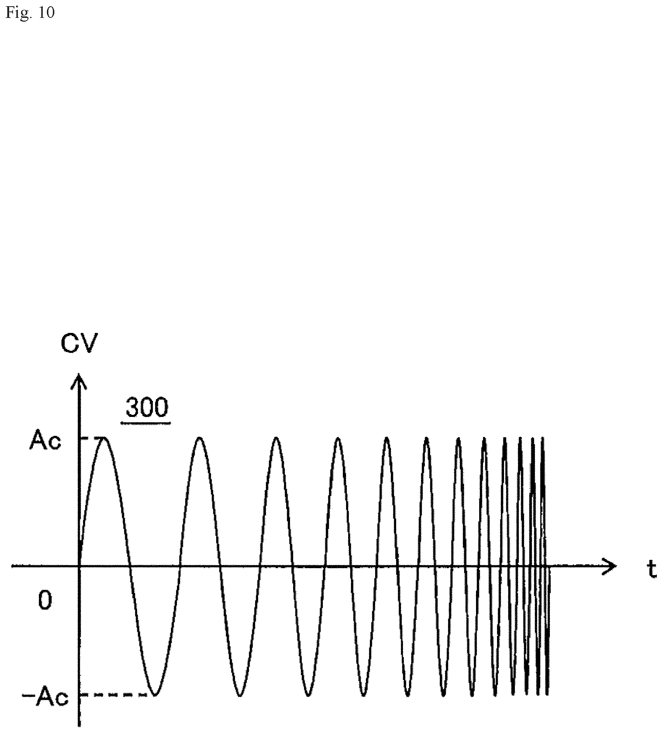

In the machine tool 1 shown in FIG. 2, the frequency of the vibration component Vc may be determined as a frequency in the resonance frequency band in the vibration condition determination mode. The resonance frequencies fr included in the resonance frequency band can be measured by inputting the current command 300 having sweep frequency variation, an example of which is shown in FIG. 10, into the servo amplifier 50. In FIG. 10, the horizontal axis denotes the time t, and the vertical axis denotes a command value CV The NC device 70 can output the current command 300 to the servo amplifier 50 as the command 57 shown in FIG. 3. The sweep frequency is a frequency that changes continuously from a start frequency to a stop frequency, and FIG. 10 shows a sweep frequency in which the frequency increases continuously. An amplitude Ac of the current command 300 remains constant, regardless of the frequency.

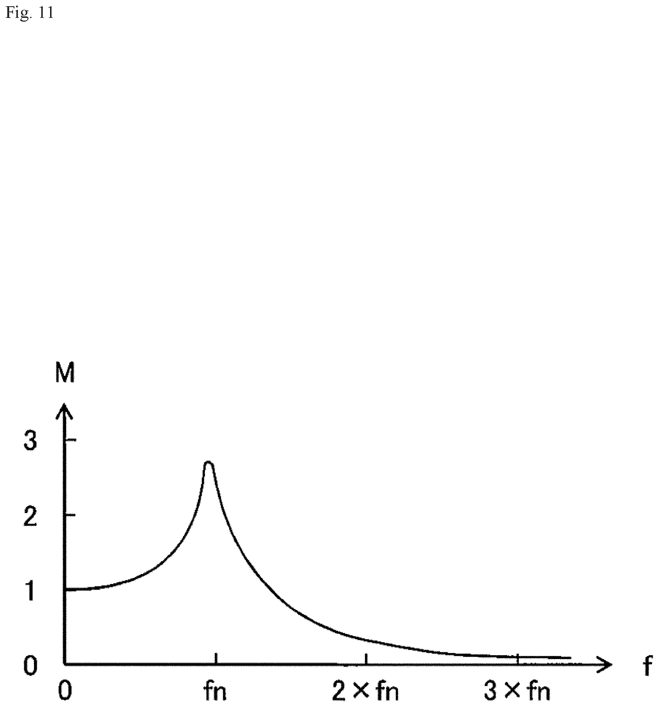

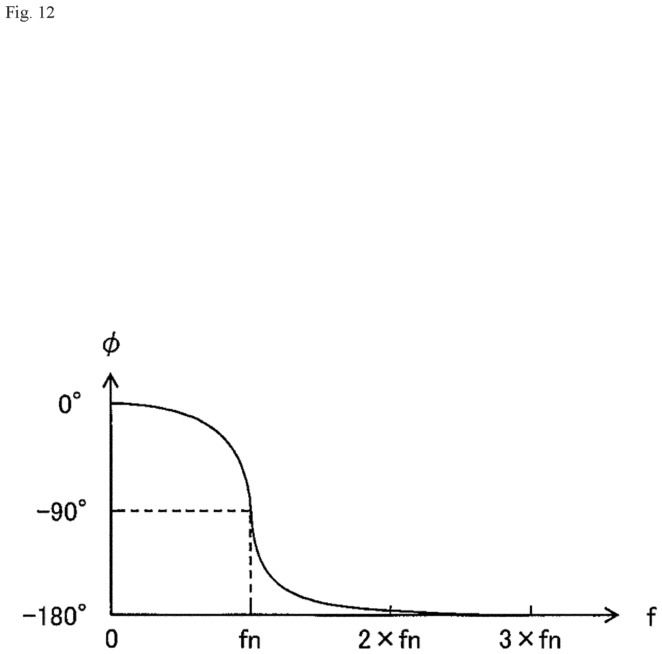

FIG. 11 schematically illustrates an example of an amplitude magnification M of the vibration relative to the frequency f in a case where external force for causing a mass point of a vibration system to vibrate is applied to the mass point. The amplitude magnification M is a ratio of the amplitude of the output vibration to the amplitude of the external force. FIG. 12 schematically illustrates an example of a phase delay ϕ of the output vibration relative to the frequency f in a case where external force for causing the mass point of the vibration system to vibrate is applied thereto. The phase delay ϕ is a phase difference between the external force and the output vibration, and using the phase of the external force as a reference, the delay of the phase of the output vibration is indicated by a negative value. Note that the mass point corresponds to the part of the machine tool 1 that holds the drive subject, the external force corresponds to the current command 300 input into the servo amplifier 50, and the output vibration corresponds to the torque command 59 that has received feedback. Accordingly, the amplitude magnification M corresponds to a ratio of the amplitude of the torque command 59 to the amplitude Ac of the current command 300.

As shown in FIG. 11, the amplitude magnification M reaches a peak near a natural frequency fn of the mass point. The reason for this is that resonance occurs. The peak of the amplitude magnification M is dependent on a damping ratio of the vibration system so as to decrease as the damping ratio increases. As shown in FIG. 12, the phase delay ϕ of the output vibration relative to the frequency f is larger than -90° when f < fn, -90° when f = fn, and smaller than -90° and larger than -180° when f > fn. Thus, when the current command 300 having sweep frequency variation is input into the servo amplifier 50, the frequency at the point where the phase delay ϕ of the torque command 59 that causes vibration after receiving feedback reaches -90° becomes the resonance frequency fr. Accordingly, the resonance frequency fr may be determined as the frequency of the vibration component Vc in the vibration condition determination mode.

FIG. 13 schematically illustrates frequency determination processing performed by the NC device 70 in the vibration condition determination mode. The NC device 70 starts the frequency determination processing when the operating unit 80 receives an operation for determining the frequency of the vibration component Vc in the vibration condition determination mode. The frequency determination processing will be described below using movement of the tool TO1 as an example.

When the frequency determination processing starts, the NC device 70 outputs the current command 300 having sweep frequency variation, in which the sweep frequency varies continuously from the start frequency to the stop frequency, to the servo amplifier 52 as the command 57 shown in FIG. 3 (step S202). The servo amplifier 52 inputs the current command 300 into the semi-closed loop, detects the phase delay ϕ of the torque command 59 that causes vibration after receiving feedback, and outputs sweep information indicating change in the phase delay ϕ relative to the frequency of the current command 300 into the NC device 70. The sweep information is information depicting a curve such as that shown in FIG. 12 within a range from the start frequency to the stop frequency. Having received the sweep information, the NC device 70 acquires the frequency of the current command 300 at the point where the phase delay ϕ reaches -90° as the resonance frequency fr (step S204). Thus, the NC device 70 and the servo amplifier 52 input the current command 300 into the semi-closed loop and detect the resonance frequency fr generated in the part of the machine tool 1 that holds the tool TO1.

Note that detection of the resonance frequency fr is not limited to detection based on the phase delay ϕ. For example, the frequency at the point where the amplitude magnification M relative to the frequency of the current command 300 reaches the maximum may be detected as the resonance frequency fr. Furthermore, when the tool post 20 is provided with a vibration sensor, the vibration of the tool post 20 relative to the frequency of the current command 300 may be detected by the vibration sensor, and the frequency at the point where the amplitude of the tool post 20 is amplified to the largest extent may be detected as the resonance frequency fr.

After detecting the resonance frequency fr, the NC device 70 determines the resonance frequency fr as the frequency of the vibration component Vc (step S206) and then terminates the frequency determination processing. When the detected resonance frequency fr is determined as the frequency of the vibration component Vc, the structures from the servo motor 42 to the tool TO1 are vibrated comparatively strongly by the vibration component Vc having the resonance frequency fr, which is applied to the drive subject from the midway position P3 to the target position P2. By vibrating the structures comparatively strongly within a range where a reduction in the positional accuracy of the tool TO1 due to the resonance itself is suppressed, the internal stress generated in the structures is easily released, leading to a further reduction in the internal stress remaining in the structures. As a result, the accuracy of the movement stop position of the tool TO1 further improves. Needless to mention, the accuracy of the stop position of the drive subject in the machining mode improves due to a similar action likewise with respect to the B-axis swiveling of the swiveling unit 25, the Z-axis movement of the workpiece W1, and so on.

Note that in order to determine the vibration conditions of the vibration component Vc other than the frequency, such as the amplitude, the NC device 70 may perform the vibration condition determination processing shown in FIG. 9.

As described above, the vibration component Vc is applied to the movement M0 of the drive subject while the drive subject moves from the midway position P3 to the target position P2 during semi-closed loop control, and therefore the drive subject reaches the target position P2 while the internal stress generated in the structures from the servo motor 40 to the drive subject is released. By reducing the residual stress in the structures when the drive subject stops, the actual stop position of the drive subject comes closer to the target position P2, leading to an improvement in the accuracy of the stop position of the drive subject. By releasing the internal stress of the structures while the drive subject moves, an increase in the cycle time of the command CM1 is suppressed. Hence, with this specific example, the accuracy of the stop position of the drive subject can be improved while suppressing an increase in the cycle time of the command CM1. Moreover, by reducing the residual stress in the structures, the torque generated by the servo motor 40 when the drive subject stops is reduced, leading to a reduction in standby power.

(3) Modified examples: Various modified examples may be considered in the present invention. For example, the control unit U1 may be constituted by the machine body 2 and the computer 100 rather than by the machine body 2 alone. Although the command CM1 for moving the drive subject is preferably a fast feed command for moving the drive subject without cutting the workpiece W1, the command CM1 may also be a cutting feed command for moving the drive subject while cutting the workpiece W1, or the like.

(4) Conclusion: According to the present invention, as described above, it is possible, through various aspects, to provide technology for a machine tool or the like with which the accuracy of a stop position of a drive subject can be improved in a case where semi-closed loop control is performed. Needless to mention, the basic actions and effects described above are likewise obtained with technology constituted only by the constituent features pertaining to the independent claims. Moreover, configurations obtained by replacing the configurations disclosed in the above examples with each other or changing the combinations thereof, configurations obtained by replacing the configurations disclosed in the prior art and the above examples with each other or changing the combinations thereof, and so on may also be implemented. The present invention also includes these configurations and so on.

## Claims

1. A machine tool for machining a workpiece using a tool, comprising:
a guide mechanism for guiding at least one drive subject among the tool and the workpiece;
a servo motor that moves the drive subject guided by the guide mechanism; and
a control unit that performs semi-closed loop control on the servo motor so as to move the drive subject from an initial position to a target position,
wherein the control unit performs the semi-closed loop control so as to apply to movement of the drive subject a vibration component with which, from a midway position between the initial position and the target position to the target position, an advancing motion toward the target position and a retreating motion opposite to the advancing motion are performed repeatedly.

2. The machine tool according to claim 1, wherein the control unit performs the semi-closed loop control so as to apply the vibration component to the drive subject over a set period within a period during which the drive subject is stopped in the target position after reaching the target position.

3. The machine tool according to claim 1 or claim 2, wherein the control unit performs the semi-closed loop control in a vibration condition determination mode for determining vibration conditions of the vibration component using each of a plurality of candidates of the vibration conditions as the vibration conditions, detects a torque generated by the servo motor when the drive subject stops in the target position, and determines the candidates, from among the plurality of candidates, with which the torque is lower than a reference torque as the vibration conditions.

4. The machine tool according to claim 1 or claim 2, wherein a frequency of the vibration component is included in a resonance frequency band in which resonance can occur in a part of the machine tool that holds the drive subject.

5. The machine tool according to claim 1 or claim 2, wherein, in a vibration condition determination mode for determining a frequency of the vibration component, the control unit inputs a current command having sweep frequency variation into the semi-closed loop, detects a resonance frequency occurring in a part of the machine tool that holds the drive subject, and determines the detected resonance frequency as the frequency of the vibration component.
